# FASCICULE DE BREVET EUROPEEN

(11) **EP 0 559 506 B1**
(45) Date de publication et mention de la délivrance du brevet: **06.09.1995**
(21) Numéro de dépôt: 93400304.7
(22) Date de dépôt: 05.02.1993
(51) Int. Cl.: F16F 13/00

(54) **Dispositif d'amortissement hydraulique pour la suspension d'un groupe motopropulseur de véhicule automobile**
Hydraulische Dämpfungseinrichtung für die Aufhängung einer Antriebsgruppe eines Kraftfahrzeuges
Hydraulic damping device for the suspension of a vehicle engine

(30) Priorité: 04.03.1992 FR 9202596
(43) Date de publication de la demande: 08.09.1993
(73) Titulaire: AUTOMOBILES PEUGEOT, 75116 Paris (FR); AUTOMOBILES CITROEN, 92200 Neuilly-sur-Seine (FR)
(72) Inventeur: Robic, Pascal, F-35000 Rennes (FR); Le Fol, Marcel, F-35410 Domloup (FR)
(74) Mandataire: Polus, Camille

(56) Documents cités:
- EP-A- 0 409 677
- US-A- 2 380 899

## Description

La présente invention concerne un dispositif d'amortissement hydraulique, notamment pour la suspension d'un groupe motopropulseur d'un véhicule automobile.

L'invention concerne plus particulièrement un dispositif pour l'amortissement des vibrations longitudinales d'un groupe motopropulseur qui sont dues notamment aux imperfections d'équilibrage du moteur.

Le document FR-A-2.650.043 décrit et représente un dispositif d'amortissement du type comportant une armature externe cylindrique et une armature interne maintenue coaxiale dans l'armature externe par un bloc de liaison élastique annulaire fixé par ses surfaces cylindriques intérieure et extérieure respectivement à l'armature interne et à l'armature externe.

Ce dispositif comporte une chambre principale de travail qui est reliée, par l'intermédiaire de conduits agencés dans l'armature interne qui est réalisée sous la forme d'un élément tubulaire, à une chambre d'expansion.

Cet agencement du type à colonne, qui comporte également deux dispositifs de butée axiale pour limiter les déplacements de l'armature interne par rapport à l'armature externe tout en autorisant un débattement angulaire relatif entre ces deux éléments, permet d'assurer de manière efficace le filtrage des vibrations à basse fréquence.

L'invention a pour but de proposer un dispositif du type mentionné précédemment qui permet d'assurer un filtrage des vibrations dans une gamme plus importante de fréquences et pour différents modes de sollicitation du dispositif.

Dans ce but, l'invention propose un dispositif d'amortissement du type mentionné précédemment, caractérisé en ce que le bloc de liaison partage l'espace interne délimité par l'armature externe en deux chambres hydrauliques principales dont chacune est délimitée à son extrémité axiale opposée au bloc de liaison par une cloison comportant au moins un orifice qui met en communication une chambre hydraulique principale avec une chambre hydraulique auxiliaire associée qui est délimitée par une membrane souple étanche reliée à l'armature externe, en ce que les deux chambres hydrauliques principales sont reliées entre elles par un conduit de liaison, et en ce que l'armature interne comporte deux organes d'obturation dont chacun est agencé dans l'une des chambres hydrauliques principales en regard de la cloison correspondante et est susceptible de venir obturer l'orifice de communication de cette cloison pour isoler la chambre hydraulique principale de sa chambre auxiliaire associée lorsque l'armature interne se déplace axialement par rapport à l'armature externe dans le sens correspondant.

Selon d'autres caractéristiques de l'invention :
- chaque cloison est percée en son centre et chaque organe d'obturation comporte une garniture annulaire d'étanchéité qui coopère avec une portion de surface annulaire en vis-à-vis de la face interne de la cloison qui entoure l'orifice central de communication ;
- chaque cloison est une coupelle sensiblement sphérique dont la concavité est tournée vers le bloc de liaison et dont le centre est situé sur l'axe général du dispositif d'amortissement et sensiblement au centre du bloc de liaison ;
- chaque organe d'obturation présente un profil en forme de calotte sphérique convexe équipée d'une garniture annulaire d'étanchéité ;
- l'une des extrémités axiales de l'armature interne s'étend axialement à travers l'orifice central d'une des deux cloisons et traverse de manière étanche la membrane souple de la chambre auxiliaire associée ;
- la cloison traversée par l'armature interne est réalisée venue de matière avec l'armature externe, et la membrane souple associée est réalisée sous la forme d'un soufflet d'étanchéité dont une extrémité est fixée à l'armature externe et dont l'autre extrémité est fixée à l'armature interne ;
- l'autre cloison est réalisée sous la forme d'un élément rapporté dont un bord périphérique extérieur prend appui contre un bord radial extérieur de l'armature externe, ces deux bords étant maintenus serrés axialement l'un contre l'autre par un anneau de sertissage ;
- la membrane souple associée à l'autre cloison comporte une virole extérieure de renfort dont un bord radial extérieur prend appui contre le bord périphérique extérieur de la cloison, ces deux bords étant maintenus serrés axialement l'un contre l'autre par l'anneau de sertissage ;
- le dispositif comporte un capuchon d'extrémité qui entoure la membrane souple associée à l'autre cloison et qui comporte un bord radial extérieur qui prend appui contre le bord périphérique extérieur de l'autre cloison, ces deux bords étant maintenus serrés axialement l'un contre l'autre par l'anneau de sertissage ;
- l'anneau de sertissage est réalisé venu de matière avec l'armature externe ;
- les garnitures d'étanchéité et le bloc de liaison élastique annulaire sont surmoulés, directement ou indirectement, sur l'armature interne.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale d'un exemple de réalisation d'un dispositif d'amortissement selon l'invention qui est illustré en position neutre ;
- la figure 2 est une vue similaire à celle de la figure 1 dans laquelle l'armature interne occupe l'une de ses deux positions axiales extrêmes par rapport à l'armature externe ; et
- la figure 3 est une vue similaire à celle de la figure 1 dans laquelle l'armature interne occupe son autre position axiale extrême.

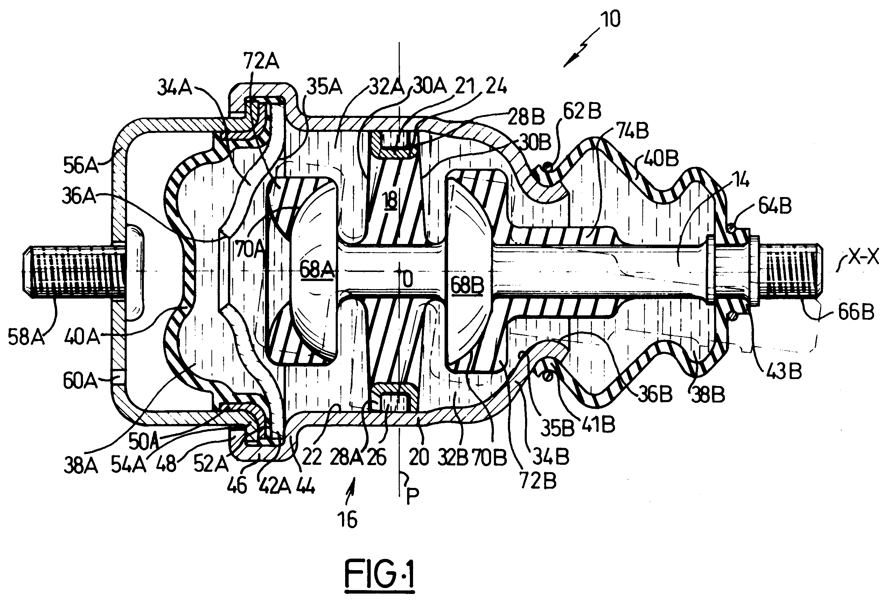

On a illustré à la figure 1 un dispositif d'amortissement hydraulique 10 également appelé support hydroélastique ou butée anti-couple.

La butée 10 est pour l'essentiel constituée par une armature interne pleine 14.

L'armature externe 16 est une pièce métallique en tôle emboutie dont la portion médiane principale 20 de section circulaire sensiblement constante de plus grand diamètre reçoit un bloc de liaison élastique annulaire 18.

Le bloc de liaison 18 est un bloc en matériau élastomère qui comporte une bague extérieure 21 métallique ou réalisée en matière thermoplastique qui est montée serrée dans la surface cylindrique intérieure 22 de la portion médiane 20 de l'armature externe 16.

La bague 21 est surmoulée et adhérisée sur la surface cylindrique extérieure 24 du bloc annulaire 18.

La bague 21 présente en section un profil en forme de U qui délimite, avec la surface cylindrique intérieure 22 un conduit annulaire 26 qui comporte un premier passage 28A et un second passage 28B qui mettent en communication les faces opposées 30A et 30B du bloc annulaire 18.

Le bloc annulaire 18 partage l'espace interne délimité par la portion médiane 20 de l'armature cylindrique externe 16 en deux parties qui s'étendent de part et d'autre des faces radiales opposées 30A et 30B du bloc annulaire 18.

Du point de vue fonctionnel, et comme cela sera expliqué par la suite, la butée 10 présente une symétrie de fonctionnement par rapport à un plan médian P perpendiculaire à l'axe général X-X de la butée et qui passe par le centre O du bloc de liaison 18.

La butée 10 comporte une première chambre hydraulique principale 32A qui est délimitée par la surface intérieure 22 de l'armature externe 16, par la face radiale 30A du bloc annulaire 18 et par une cloison 34A en forme de coupelle sphérique.

La cloison 34A comporte en son centre un orifice central 36A qui met en communication la chambre hydraulique principale 32A avec une chambre hydraulique auxiliaire 38A, associée à la chambre principale 32A et qui est délimitée par une membrane souple 40A.

La cloison 34A est réalisée sous la forme d'une pièce rapportée et son bord périphérique extérieur 42A prend appui axialement contre un bord radial extérieur 44 de la portion médiane 20 de l'armature externe 16.

Les bords 42A et 44 sont maintenus sertis l'un contre l'autre par l'intermédiaire d'un anneau de sertissage 46 qui est réalisé venu de matière avec l'armature externe 16.

L'anneau de sertissage 46 comporte un bord radial interne de fermeture 48 qui s'étend en vis-à-vis du bord radial extérieur 44.

Le bord radial extérieur 52A de la membrane souple 40A, renforcée par une virole métallique 50A, prend également appui axialement contre le bord périphérique 42A de la cloison 34A.

Le serrage axial des bords 52A et 42A est assuré par l'anneau de sertissage 46 avec interposition du bord radial extérieur 54A d'un capuchon d'extrémité 56A qui protège d'une part la membrane souple 40A, et qui comporte par exemple une liaison filetée centrale 58A pour relier l'armature cylindrique externe 16 au bloc du groupe motopropulseur.

Afin de permettre à la membrane souple 40A de se déformer librement, le capuchon 56A comporte au moins un orifice 60A de mise à l'air libre.

L'étanchéité de la chambre principale 32A et de la chambre auxiliaire associée 38A est assurée par le sertissage de la virole de renfort 50A.

La butée 10 comporte, de manière symétrique, une seconde cloison en forme de coupelle sphérique 34B qui est réalisée venue de matière avec la portion médiane 20 de l'armature externe 16 qu'elle prolonge axialement.

La coupelle 34B est percée en son centre par un orifice 36B qui met en communication une chambre hydraulique principale 32B avec une chambre hydraulique auxiliaire associée 38B.

La chambre hydraulique auxiliaire 38B est délimitée par une membrane souple en forme de soufflet 40B dont une première extrémité axiale 41B est reliée de manière étanche à l'armature externe 16 par un anneau élastique de serrage 62B et dont l'autre extrémité axiale 43B est reliée de manière étanche à l'armature interne 14 par un anneau de serrage 64B au voisinage de l'extrémité libre filetée 66B de l'armature 14 qui fait saillie axialement hors de la butée 10 pour être fixée par exemple à la structure du véhicule.

En effet, comme on peut le voir sur la figure, le corps cylindrique plein de l'armature interne 14 s'étend axialement à travers l'ouverture 36B de la cloison en forme de coupelle 34B puis à travers la chambre auxiliaire 38B.

Le corps de l'armature interne 14 comporte deux organes d'obturation et de butée axiale 68A et 68B disposés respectivement dans les chambres hydrauliques principales 32A et 32B.

L'organe de butée et d'étanchéité 68A présente une forme générale de calotte sphérique dont la surface externe convexe 70A est tournée vers la face interne concave 35A de la cloison 34A.

La surface externe 70A est équipée d'une garniture annulaire d'étanchéité en matériau élastomère 72A qui est susceptible de venir coopérer avec une portion annulaire en vis-à-vis de la face interne 35A.

D'une manière symétrique, l'organe de butée et d'étanchéité 68B comporte une portion de face sphérique convexe 70B qui s'étend en regard de la surface interne 35B de la cloison 34B.

La surface 70B est également équipée d'une garniture annulaire d'étanchéité 72B qui se prolonge axialement par un manchon en matériau élastomère 74B qui entoure le corps cylindrique de l'armature interne 14 et qui s'étend à travers l'orifice de communication 36B.

En effet, comme cela a été illustré en trait mixte à la figure 1, l'armature interne 14 est susceptible de pivoter autour du point O par rapport à l'armature externe 16 et le manchon en matériau élastomère 74B fait fonction d'amortisseur des chocs lorsque le corps de l'armature interne 14 vient en butée contre le bord interne de l'orifice 36B.

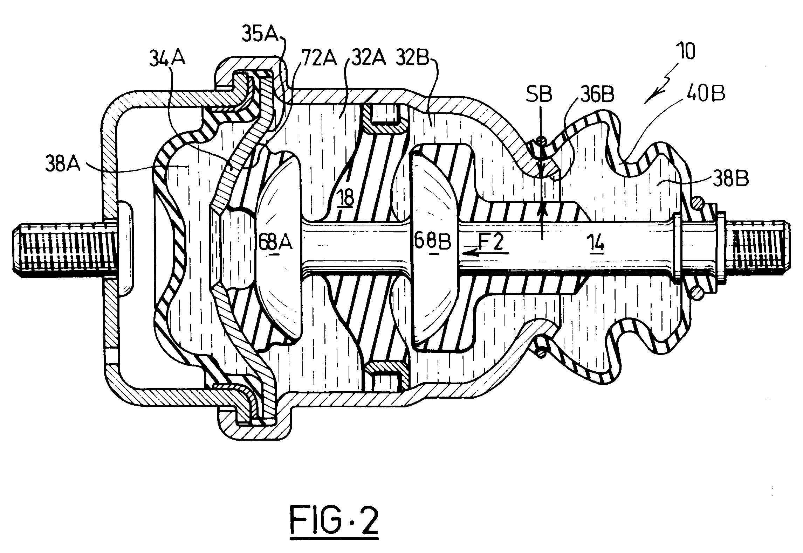

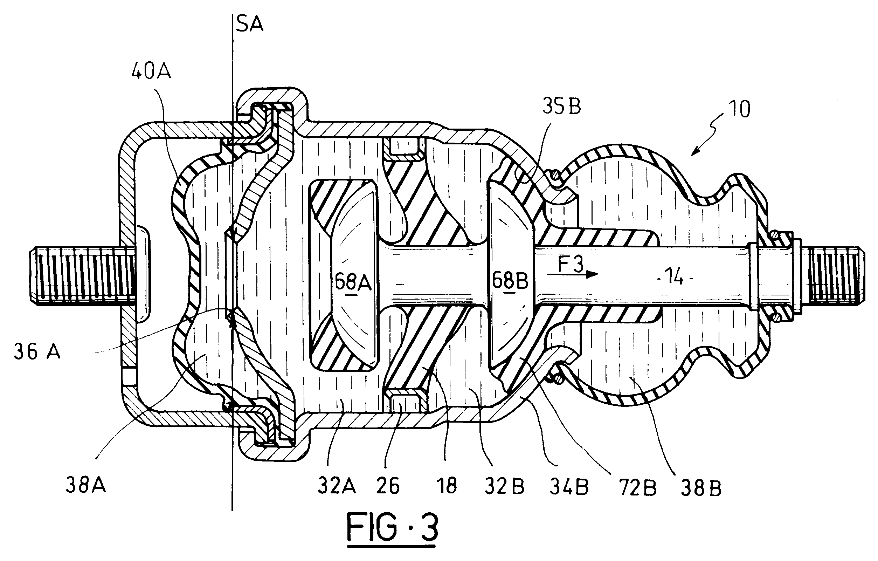

On décrira maintenant le mode de fonctionnement de la butée 10 en se référant notamment aux figures 2 et 3.

Selon qu'elle est sollicitée axialement dans l'un des deux sens F2 ou F3, par rapport à l'armature externe 16, l'armature interne 14 est susceptible de venir occuper l'une ou l'autre de ses deux positions axiales extrêmes illustrées respectivement aux figures 2 et 3.

Comme cela est illustré à la figure 2, lorsque l'armature interne est sollicitée dans le sens F2, l'organe de butée et d'étanchéité 68A vient en butée contre la face interne 35A de la cloison 34A.

Dans cette position, la garniture d'étanchéité 72A isole hydrauliquement la chambre hydraulique principale 32A de sa chambre hydraulique auxiliaire 38A.

Dans cette position, la chambre hydraulique principale 32A devient une chambre de travail qui est en liaison par l'intermédiaire du conduit de liaison 26 avec la chambre hydraulique principale 32B, tandis que la chambre hydraulique auxiliaire 38A est complètement isolée et est alors une chambre neutre du point de vue du fonctionnement de la butée.

La chambre hydraulique principale 32A, dont la tenue à la pression dépend de la rigidité du bloc annulaire 18, permet au liquide de circuler en direction de la chambre hydraulique principale 32B.

Cette circulation se poursuit jusqu'à ce que la résonance de la colonne de liquide contenu dans le conduit de liaison 26 intervienne.

Au-delà de cette résonance, et lorsque la fréquence des vibrations auxquelles est soumise la butée 10 augmente, il se produit un nouveau phénomène de résonance qui est lié à la section de passage SB de l'orifice de communication 36B entre la chambre hydraulique principale 32B et la chambre hydraulique auxiliaire 38B qui se comporte comme une chambre de détente.

D'une manière symétrique, et en considérant la figure 3, lorsque l'organe de butée et d'étanchéité 68B vient en contact avec la cloison 34B avec interposition de la garniture d'étanchéité 72B, la chambre hydraulique principale 32B est isolée de la chambre hydraulique auxiliaire 38B et est en communication par le conduit de liaison 26 avec la chambre hydraulique principale 32A qui communique elle-même avec la chambre hydraulique auxiliaire 38A qui devient une chambre de détente à laquelle elle est reliée par l'orifice de communication 36A de section SA.

Le fonctionnement est identique à celui qui a été décrit dans le cas de la figure 2, les deux phénomènes de résonance de la colonne 26 et de la colonne dûe à la section de passage SA se produisant successivement au fur et à mesure de l'augmentation de la fréquence des vibrations.

On a ainsi réalisé une butée anti-couple dont le fonctionnement est parfaitement symétrique et comporte deux états principaux :
- un état neutre illustré à la figure 1 dans laquelle elle présente une très faible raideur globale et qui correspond au fonctionnement du moteur au ralenti ; et
- un second état, dit état d'amortissement, qui est illustré aux figures 2 et 3, qui est parfaitement adapté au filtrage des vibrations et notamment en cas de reprise du couple moteur après inversion de celui-ci ainsi qu'aux à-coups de couple, et ceci quel que soit le sens de sollicitation de la butée.

La butée, dont l'assemblage est particulièrement simple, permet également de traiter le filtrage des vibrations pour les modes à haute fréquence tout en permettant des débattements angulaires importants entre les deux armatures.

## Revendications

1. Dispositif (10) d'amortissement hydraulique, notamment pour la suspension d'un groupe motopropulseur de véhicule automobile, du type comportant une armature externe cylindrique (16, 20) et une armature interne (14) maintenue coaxiale dans l'armature externe par un bloc de liaison élastique annulaire (18) fixé par ses surfaces cylindriques intérieure et extérieure respectivement à l'armature interne (14) et à l'armature externe (22), caractérisé en ce que le bloc de liaison (18) partage l'espace interne délimité par l'armature externe (16) en deux chambres hydrauliques principales (32A, 32B) dont chacune est délimitée à son extrémité axiale opposée au bloc de liaison (18) par une cloison (34A, 34B) comportant au moins un orifice (36a, 36B) qui met en communication une chambre hydraulique principale (32A, 32B) avec une chambre hydraulique auxiliaire associée (38A, 38B) qui est délimitée par une membrane souple étanche (40A, 40B) reliée à l'armature externe (16), en ce que les deux chambres hydrauliques principales (32A, 32B) sont reliées entre elles par un conduit de liaison (26), et en ce que l'armature interne (14) porte deux organes d'obturation (68A, 68B) dont chacun est agencé dans l'une (32A, 32B) des chambres hydrauliques principales en regard de la cloison (34A, 34B) et est susceptible de venir obturer l'orifice (36A, 36B) de communication de cette cloison (34A, 34B) pour isoler la chambre hydraulique principale correspondante (32A, 32B) de sa chambre auxiliaire associée (38A, 38B) lorsque l'armature interne (14) se déplace axialement par rapport à l'armature externe dans le sens correspondant (F2, F3).

2. Dispositif d'amortissement selon la revendication 1, caractérisé en ce que chaque cloison (34A, 34B) est percée en son centre et en ce que chaque organe d'obturation (68A, 68B) comporte une garniture annulaire d'étanchéité (72A, 72B) qui coopère avec une portion de surface annulaire en vis-à-vis de la face interne (35A, 35B) de la cloison (34A, 34B) qui entoure l'orifice central de communication (36A, 36B).

3. Dispositif d'amortissement selon la revendication 2, caractérisé en ce que chaque cloison (34A, 34B) est une coupelle sensiblement sphérique dont la concavité est tournée vers le bloc de liaison (18) et dont le centre est situé sur l'axe général (X-X) du dispositif d'amortissement et sensiblement au centre (O) du bloc de liaison (18).

4. Dispositif d'amortissement selon la revendication 3 prise en combinaison avec la revendication 2, caractérisé en ce que chaque organe d'obturation présente un profil en forme de calotte sphérique convexe (70A, 70B) équipée d'une garniture annulaire d'étanchéité (72A, 72B).

5. Dispositif d'amortissement selon l'une quelconque des revendications 2 à 4, caractérisé en ce que l'une (66B) des extrémités axiales de l'armature interne (14) s'étend axialement à travers l'orifice central (36B) d'une (34B) des deux cloisons et traverse de manière étanche la membrane souple (40B) de la chambre auxiliaire associée (38B).

6. Dispositif d'amortissement selon la revendication 5, caractérisé en ce que la cloison (34B) traversée par l'armature interne (14) est réalisée venue de matière avec l'armature externe (16), et en ce que la membrane souple associée (40B) est réalisée sous la forme d'un soufflet d'étanchéité dont une extrémité (41B) est fixée à l'armature externe (16) et dont l'autre extrémité (43B) est fixée à l'armature interne (14, 66B).

7. Dispositif d'amortissement selon l'une des revendications 5 ou 6, caractérisé en ce que l'autre cloison (34A) est réalisée sous la forme d'un élément rapporté dont un bord périphérique extérieur (42A) prend appui contre un bord radial extérieur (44) de l'armature externe (16), ces deux bords étant maintenus serrés axialement l'un contre l'autre par un anneau de sertissage.

8. Dispositif d'amortissement selon la revendication 7, caractérisé en ce que la membrane souple (40A) associée à ladite autre cloison (34A) comporte un bord radial extérieur (52A) renforcé par une virole (50A) qui prend appui contre le bord périphérique extérieur (42A) de la cloison, ces deux bords étant maintenus serrés axialement l'un contre l'autre par l'anneau de sertissage (46).

9. Dispositif d'amortissement selon l'une des revendications 7 ou 8, caractérisé en ce qu'il comporte un capuchon d'extrémité (56A) qui entoure la membrane souple (40A) associée à l'autre cloison (34A) et qui comporte un bord radial extérieur (54A) qui prend appui contre le bord périphérique extérieur de l'autre cloison, ces deux bords étant maintenus serrés axialement l'un contre par l'anneau de sertissage (46).

10. Dispositif d'amortissement selon l'une quelconque des revendications 7 à 9, caractérisé en ce que l'anneau de sertissage (46) est réalisé venu de matière avec l'armature externe (16, 22).

11. Dispositif d'amortissement selon l'une quelconque des revendications 2 à 10, caractérisé en ce que les garnitures d'étanchéité (72A, 72B) et le bloc de liaison élastique annulaire (18) sont surmoulés sur l'armature interne.

## Claims

1. Hydraulic shock-absorbing device (10), notably for the suspension of a power unit of a motor vehicle, of the type comprising an external cylindrical armature (16, 20) and an internal armature (14) held coaxially iii the external armature by an annular elastic connection block (18) fixed by its inside and outside cylindrical surfaces to the internal armature (14) and external armature (22) respectively, characterised in that connection block (18) divides the internal space delimited by external armature (16) into two main hydraulic chambers (32A, 32B) each of which is delimited at its axial end opposite connection block (18) by a partition (34A, 34B) having at least one orifice (36A, 36B) which places a main hydraulic chamber (32A, 32B) in communication with an associated auxiliary hydraulic chamber (38A, 38B) which is delimited by a sealing flexible diaphragm (40A, 40B) connected to external armature (16), in that the two main hydraulic chambers (32A, 32B) are linked together by a connection channel (26), and in that internal armature (14) has two blanking organs (68A, 68B) each of which is arranged in one (32A, 32B) of the main hydraulic chambers facing partition (34A, 34B) and is capable of blanking off communication orifice (36A, 36B) of this partition (34A, 34B) to isolate the corresponding main hydraulic chamber (32A, 32B) of its associated auxiliary chamber (38A, 38B) when internal armature (14) moves axially in relation to the external armature in the corresponding direction (F2, F3).

2. Shock-absorbing device according to claim 1, characterised in that each partition (34A, 34B) is pierced through its centre and in that each blanking organ (68A, 68B) comprises an annular seal (72A, 72B) which co-operates with a portion of the annular surface at internal face (35A, 35B) of partition (34A, 34B) which surrounds central communication orifice (36A, 36B).

3. Shock-absorbing device according to claim 2, characterised in that each partition (34A, 34B) is an essentially spherical tap the concavity of which is turned towards connection block (18) and whose centre is located along general axis (X-X) of the shock-absorbing device and essentially in the centre (O) of connection block (18).

4. Shock-absorbing device according to Claim 3 considered in combination with Claim 2, characterised in that each blocking organ has a convex spherical bowl-shaped profile (70A, 70B) fitted with an annular seal (72A, 72B).

5. Shock-absorbing device according to any one of claims 2 to 4 characterised in that one (66B) of the axial ends of internal armature (14) extends axially through central orifice (36B) of one (34B) of the two partitions and passes in a sealed manner through flexible diaphragm (40B) of the associated auxiliary chamber (38B).

6. Shock-absorbing device according to Claim 5, characterised in that partition (34B) passed through by internal armature (14) is integral with external armature (16), and in that the associated flexible diaphragm (40B) is in the form of a sealing gaiter one end of which (41B) is fixed to external armature (16) and the other end (43B) is fixed to the internal armature (14, 66B).

7. Shock-absorbing device according to one of Claims 5 or 6, characterised in that the other partition (34A) is in the form of a separate element one outer peripheral edge of which (42A) rests on an outer radial edge (44) of external armature (16), these two edges being kept held against each other axially by a crimping ring.

8. Shock-absorbing device according to Claim 7, characterised in that flexible diaphragm (40A) associated to the said other partition (34A) has an outer radial edge (52A) reinforced by a collar (50A) which rests on the outer peripheral edge (42A) of the partition, these two edges being kept axially held against each other by crimping ring (46).

9. Shock-absorbing device according to one of Claims 7 or 8, characterised in that it has an end cowl (56A) which surrounds flexible diaphragm (40A) associated to the other partition (34A) and which has an outer radial edge (54A) which rests on the outer peripheral edge of the other partition, these two edges being kept axially held against each other by crimping ring (46).

10. Shock-absorbing device according to any one of Claims 7 to 9, characterised in that crimping ring (46) is integral with external armature (16, 22).

11. Shock-absorbing device according to any one of claims 2 to 10, characterized in that seals (72A, 72B) and annular elastic connection block (18) are moulded onto the internal armature.

## Patentansprüche

1. Hydraulische Dämpfungsvorrichtung (10), insbesondere zur Aufhängung eines Automobiltriebwerks, des Typs mit einem äußeren zylindrischen Armatur (16, 20) und einer inneren Armatur (14), in der äußeren Armatur durch einen ringförmigen elastischen verbindungsblock (18) koaxial gehalten ist, der an seinen inneren bzw. äußeren Zylinderflächen an der inneren Armatur (14) bzw. äußeren Armatur (22) befestigt ist, dadurch gekennzeichnet, daß der verbindungsblock (18) den durch die äußere Armatur (16) begrenzten Innenraum in zwei Haupt-Hydraulikkammern (32A, 32B) unterteilt, von denen jede an ihrem dem Verbindungsblock (18) entgegengesetzten axialen Ende durch eine Wand (34A, 34B) begrenzt ist, die mit wenigstens einer Öffnung (36A, 36B) versehen ist, welche eine Haupt-Hydraulikkammer (32A, 32B) mit einer zugehörigen Hilfs-Hydraulikkammer (38A, 38B) verbindet, die durch eine mit der äußeren Armatur (16) verbundene flexible dichte Membran (40A, 40B) begrenzt ist, daß die beiden Haupt-Hydraulikkammern (32A, 32B) untereinander durch eine Verbindungsleitung (26) verbunden sind, und daß die innere Armatur (14) zwei Schließorgane (68A, 68B) aufweist, von denen jedes in einer der Haupt-Hydraulikkammern (32A, 32B) gegenüber der Wand (34A, 34B) angeordnet und zum schließen der Verbindungsöffnung (36A, 36B) der jeweiligen Wand (34A, 34B) betätigbar ist, um die entsprechende Haupt-Hydraulikkammer (32A, 32B) von der zugehörigen Hilfskammer (38A, 38B) zu isolieren, wenn sich die innere Armatur (14) in bezug auf die äußere Armatur in der entsprechenden Richtung (F2, F3) axial verschiebt.

2. Dämpfungsvorrichtung nach Anspruch 1, dadurch gekennzeichnet, daß jede Wand (34A, 34B) in ihrer Mitte durchbrochen ist, und daß jedes Schließorgan (68A, 68B) eine ringförmige Dichtungsgarnitur (72A, 72B) aufweist, die mit einem gegenüberliegenden Teil der die zentrale Verbindungsöffnung (36A, 36B) umgebenden ringförmigen Fläche der Innenfläche (35A, 35B) der Wand (34A, 34B) zusammenwirkt.

3. Dämpfungsvorrichtung nach Anspruch 2, dadurch gekennzeichnet, daß jede Wand (34A, 34B) ein im wesentlichen sphärischer Napf ist, dessen konkave Seite dem Verbindungsblock (18) zugewandt ist und dessen Mitte sich auf der Hauptachse (X-X) der Dämpfungsvorrichtung und im wesentlichen in der Mitte (O) des Verbindungsblocks (18) befindet.

4. Dämpfungsvorrichtung nach Anspruch 3 in Kombination mit Anspruch 2, dadurch gekennzeichnet, daß jedes Schließorgan ein Profil in Form einer sphärischen konvexen Kalotte (70A, 70B) mit einer ringförmigen Dichtungsgarnitur (72A, 72B) aufweist.

5. Dämpfungsvorrichtung nach einem der Ansprüche 2 bis 4, dadurch gekennzeichnet, daß eines (68B) der axialen Enden der inneren Armatur (14) sich axial durch die Mittelöffnung (36B) einer (34B) der beiden Wände und dicht durch die flexible Membran (40B) der zugehörigen Hilfskammer (38B) erstreckt.

6. Dämpfungsvorrichtung nach Anspruch 5, dadurch gekennzeichnet, daß die von der inneren Armatur (14) durchsetzte Wand (34B) einstückig mit der äußeren Armatur (16) aus einem Material ausgebildet ist, und die zugehörige flexible Membran (40B) in Form einer Dichtmanschette ausgebildet ist, deren eines Ende (41B) an der äußeren Armatur (16) und deren anderes Ende (43B) an der inneren Armatur (14, 66B) befestigt ist.

7. Dämpfungsvorrichtung nach einem der Ansprüche 5 oder 6, dadurch gekennzeichnet, daß die andere Wand (34A) in Form eines angesetzten Elements ausgebildet ist, dessen Außenumfangsrand (42A) an einem radial äußeren Rand (44) der äußeren Armatur (16) anliegt, wobei die beiden Ränder durch einen Bördelring axial gegeneinander gedrückt gehalten sind.

8. Dämpfungsvorrichtung nach Anspruch 7, dadurch gekennzeichnet, daß die der anderen Wand (34A) zugeordnete flexible Membran (40A) einen durch einen Ring (50A) verstärkten radial äußeren Rand (52A) aufweist, der an dem Außenumfangsrand (42A) der Wand anliegt, wobei die beiden Ränder durch den Bördelring (46) axial gegeneinander gedrückt gehalten sind.

9. Dämpfungsvorrichtung nach einem der Ansprüche 7 oder 8, dadurch gekennzeichnet, daß sie eine Endkappe (56A) aufweist, die die der anderen Wand (34A) zugeordnete flexible Membran (40A) umschließt und einen radial äußeren Rand (54A) aufweist, der an dem Außenumfangsrand der anderen Wand anliegt, wobei die beiden Ränder durch den Bördelring (46) axial gegeneinander gedrückt gehalten sind.

10. Dämpfungsvorrichtung nach einem der Ansprüche 7 bis 9, dadurch gekennzeichnet, daß der Bördelring (46) einstückig mit der äußeren Armatur (16, 22) ausgebildet ist.

11. Dämpfungsvorrichtung nach einem der Ansprüche 2 bis 10, dadurch gekennzeichnet, daß die Dichtungsgarnituren (72A, 72B) und der ringförmige elastische Verbindungsblock (18) um die innere Armatur angeformt sind.
